# DEMANDE DE BREVET EUROPEEN

(11) **EP 1 465 180 A1**
(43) Date de publication de la demande: **06.10.2004**
(21) Numéro de dépôt: 04447073.0
(22) Date de dépôt: 24.03.2004
(51) Int. Cl.: G11B 17/04

(54) **Dispositif de chargement de disque**

(30) Priorité: 02.04.2003 BE 200300206
(71) Demandeur: STAAR SOCIETE ANONYME, B-1200 Bruxelles (BE)
(72) Inventeur: d'Alayer de Costemore d'Arc, Stéphanie Marie André, 1474 Ways (BE)
(74) Mandataire: Overath, Philippe

(57) **Abrégé**

Dispositif de chargement, déchargement de supports d'informations (40) dans des unités d'enregistrement et/ou de reproduction des informations qu'ils portent mettant en oeuvre un système de préhension (10) constitué de deux éléments mobiles l'un par rapport (11, 12) à l'autre, montés librement sur un moyen de déplacement (20) et associés à un moyen de commande (30) leur assurant un mouvement relatif lors de l'actionnement du moyen de déplacement (20) pour emprisonner/libérer le support.

## Description

La présente invention se rapporte aux dispositifs de chargement/déchargement de supports d'informations dans des appareils d'enregistrement et/ou de reproduction des informations qu'ils portent et concerne plus particulièrement ceux effectuant de façon autonome la mise en position opérative, inopérative desdits supports d'informations sur leurs moyens d'entraînement et de lecture. L'invention s'applique à tout support d'informations et entre autres à ceux dotés d'une périphérie circulaire, comme par exemple les disques dits compacts, les disques DVD, HD,... les supports souples ou rigides, éventuellement contenus dans des boîtiers de forme circulaire ou parallélépipédique.

De nombreux dispositifs du genre décrit ci-dessus ont été proposés, notamment ceux mettant en oeuvre des rouleaux pinçant le disque comme décrit dans le brevet EP 0177232. Cependant, la surface externe de ces rouleaux, généralement pourvue de caoutchouc pour déplacer le disque, voit s'y incruster des particules solides qui, lors de la rotation des rouleaux, peuvent rayer la surface des disques avec pour conséquence de réduire sensiblement la qualité de la lecture des informations qu'ils portent, voir détruire certaines informations.

Un autre mécanisme, tel celui de la demanderesse objet du brevet US 4.513.409, est largement utilisé mais le mouvement hélicoïdal mis en oeuvre requiert de l'espace à la périphérie du disque ce qui le rend moins facile à incorporer dans des appareils compacts.

Un autre dispositif, tel celui de la demanderesse objet du brevet US 4.682.320, assure un roulement du disque sur sa périphérie mais comme celle-ci comporte fréquemment des bavures de moulage ou de la couche de protection, ce roulement tend à abraser cette périphérie et donc à détacher les bavures dont certaines se déposent sur le disque ou s'incrustent dans le caoutchouc du moyen de roulement, ce qui est néfaste.

Le but de l'invention est donc de remédier aux inconvénients précités en proposant un dispositif de chargement de support d'informations coopérant avec celui-ci sur une surface limitée de sa périphérie, notamment celle non porteuse d'informations, évitant tout mouvement relatif entre le dispositif et le support d'informations et qui soit compact, simple, bon marché, facile à mettre en oeuvre et fiable.

Un autre but de l'invention est de proposer un dispositif d'un encombrement très réduit.

Un autre but de l'invention est de proposer un dispositif assurant également le clamage du support d'informations sur ses moyens d'entraînement.

Un autre but de l'invention est de proposer un dispositif de chargement pour supports d'informations de tailles différentes.

En vue de la réalisation de ces buts, le dispositif objet de l'invention est essentiellement caractérisé par le contenu de la revendication principale.

L'invention ressortira d'une description détaillée, non limitative, donnée ci-après de deux modes de réalisation préférés auxquels diverses améliorations, modifications peuvent être apportées sans pour autant sortir du cadre de l'invention et pour laquelle :
- la figure 1 est une vue de dessus sommaire d'un appareil muni du dispositif de l'invention en position inopérative d'insertion ou d'éjection d'un support d'informations de grande taille,
- la figure 1A est semblable à la figure 1, mais pour une variante assurant également le chargement de supports d'informations de petite taille,
- la figure 2 est semblable à la figure 1, le dispositif de chargement ayant saisi le support d'informations,
- la figure 3 est semblable à la figure 2, le dispositif ayant amené le support d'informations au-dessus de sa position opérative,
- la figure 3A est semblable à la figure 3, mais pour le dispositif de la figure 1A,
- la figure 4 est semblable à la figure 3, l'appareil étant en position opérative,
- la figure 4A est semblable à la figure 4 mais pour le dispositif de la figure 1A,
- la figure 5 est une coupe partielle et à plus grande échelle du dispositif de la figure 4 ou 4A, selon le plan de coupe A-A, avec représentation partielle des moyens d'entraînement et de clamage du support d'informations,
- la figure 6 est semblable à la figure 5, le dispositif ayant saisi un support d'informations,
- la figure 7 est une coupe partielle et à plus grande échelle d'un élément du dispositif selon le plan de coupe B-B de la figure 3 ou 3A,
- la figure 8 est semblable à la figure 7, les éléments étant dans la position représentée aux figures 4, 4A et 5,
- la figure 9 montre un élément en perspective.

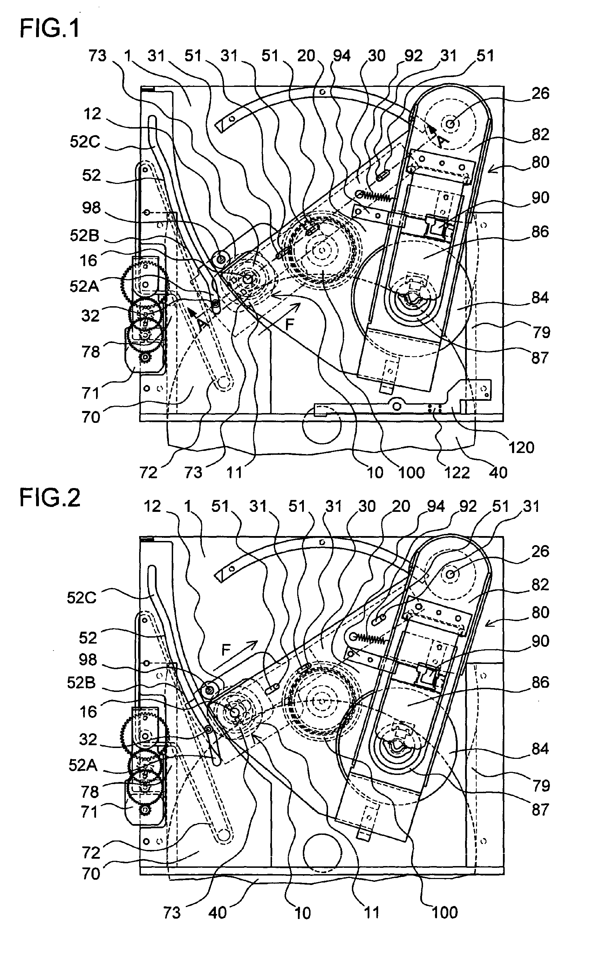

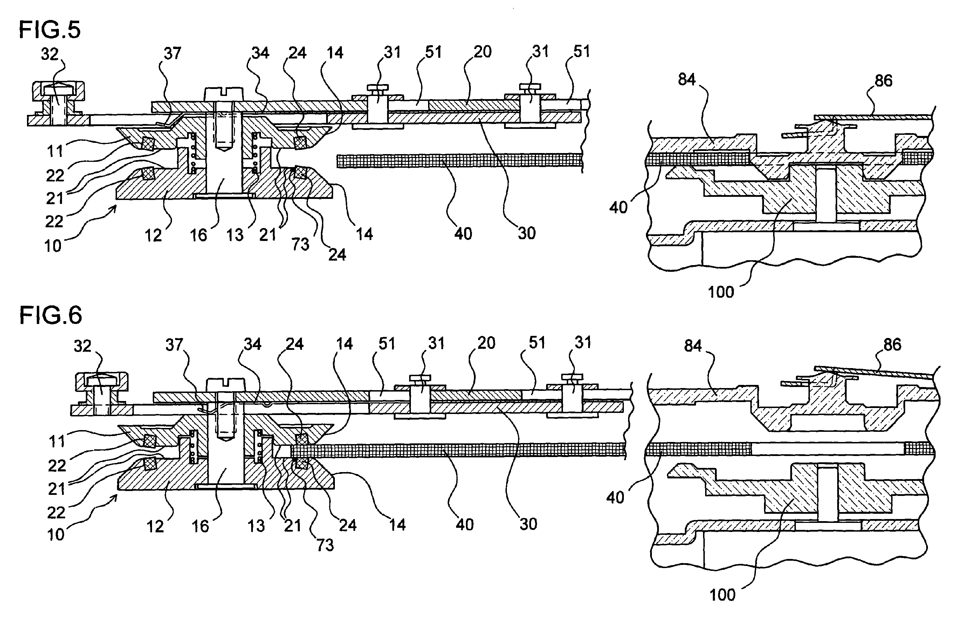

Comme montré en détail aux figures 1 à 6, le dispositif de l'invention met en oeuvre un système de préhension 10 comportant de préférence deux éléments 11, 12 (figure 5), mobiles l'un par rapport à l'autre ; dans l'exemple décrit ces éléments sont des portions de disques maintenus écartées par un moyen approprié, avantageusement élastique 13 tel un ressort. De préférence, les surfaces 21 en vis-à-vis des deux éléments 11, 12 procurent une bonne adhérence et dans la réalisation décrite, ces surfaces sont munies d'une gorge 22 emprisonnant une courroie 24 en caoutchouc surplombant légèrement chaque surface. De préférence, ces courroies 24 sont de section carrée tandis que les gorges 22 sont légèrement inclinées pour que les courroies 24 agissent par un effet de coin sur le bord périphérique du support 40, bord qui ne porte pas d'informations. Ces surfaces pourraient également être partiellement ou entièrement recouvertes de caoutchouc, de feutre ou de toute autre matière ayant un bon coefficient d'adhérence. La périphérie desdits éléments 11, 12 possède de préférence un profil 14 incliné ou en biseau pour faciliter, guider l'insertion d'un support 40 d'informations, ici un disque compact, entre eux. Le profil des deux éléments 11, 12 est sensiblement circulaire mais tout autre profil adapté à la géométrie du support d'informations, tel qu'en arc ayant sensiblement le même rayon de courbure que les supports à saisir, linéaire,... convient.

Les deux éléments 11, 12 sont montés librement sur un axe 16 fixé sur un moyen de déplacement 20 tel un bras mobile. Cette disposition est particulièrement avantageuse car il n'y a, pendant le chargement/déchargement, aucun mouvement relatif entre le support d'informations 40 et les deux éléments 11, 12 ; tout mouvement relatif ayant lieu entre le bras 20 et lesdits éléments 11, 12 qui tournent librement autour de l'axe 16. De ce fait, même si une impureté se trouvait positionnée sur l'un des éléments 11, 12 ou entre l'une des courroies 24 et le support d'informations 40, elle ne pourrait jamais causer la moindre dégradation au support 40 puisqu'elle resterait parfaitement immobile par rapport audit support 40.

Dans les modes de réalisation décrits et comme montré aux figures 5, 6, un moyen de commande 30, telle une coulisse ou tout autre élément approprié, est solidaire du bras 20 et peut y effectuer un mouvement relatif pour agir sur les éléments mobiles 11, 12. Dans l'exemple décrit, ce mouvement relatif est assuré grâce à des tétons 31 portés par le moyen de commande 30 et passant au travers de gorges 51, pratiquées dans le bras 20. Ce mouvement relatif est, dans les modes de réalisation décrits, commandé par un élément 32 tel un axe fixé à une extrémité du moyen de commande 30 et coopérant avec un moyen de commande 52 telle une gorge/arête (figures 1 à 4) pratiquée dans un élément 70 fixe porté par le châssis 1 de l'appareil. Comme on le comprendra aisément, ce mouvement relatif pourrait être commandé par de nombreux autres moyens, par exemple une gorge ou une arête placée près de l'autre extrémité de la coulisse, une came, éventuellement un ressort en épingle, un élément électromagnétique ou piézo-électrique, un micro-moteur, des cames, des excentriques agissant horizontalement ou verticalement sur l'un ou l'autre ou encore sur les deux éléments mobiles 11, 12,... Dans la réalisation décrite, la coulisse 30 porte une languette 34 fixée à l'aide des tétons 31 et positionnée entre ladite coulisse et le bras 20 (figures 5, 6). L'extrémité de cette languette 34 située près des éléments mobiles 11, 12 possède un profil particulier, notamment de façon à présenter deux pattes 37 en forme de « V » situées de part et d'autre de l'axe 16 qui, lors du mouvement relatif de la coulisse 30 et donc de la languette 34, appuient sur ou s'écartent de la surface supérieure de l'élément 11 pour le rapprocher ou l'éloigner de l'élément 12 en agissant à l'encontre ou en le soumettant à l'action du ressort 13.

Comme montré aux figures 1 à 4, le bras 20 pivote autour d'un axe 26 porté par le châssis 1 et est mû par un moyen d'entraînement, dans le cas présent, un sous-ensemble fixé au châssis 1 et composé d'un micro-moteur 71 actionnant par l'intermédiaire d'un train d'engrenages, une courroie 72 (figures 1, 1A, 2) ici, crantée et sans fin, ou tout autre moyen approprié, ceci n'étant qu'accessoire pour le dispositif de l'invention.

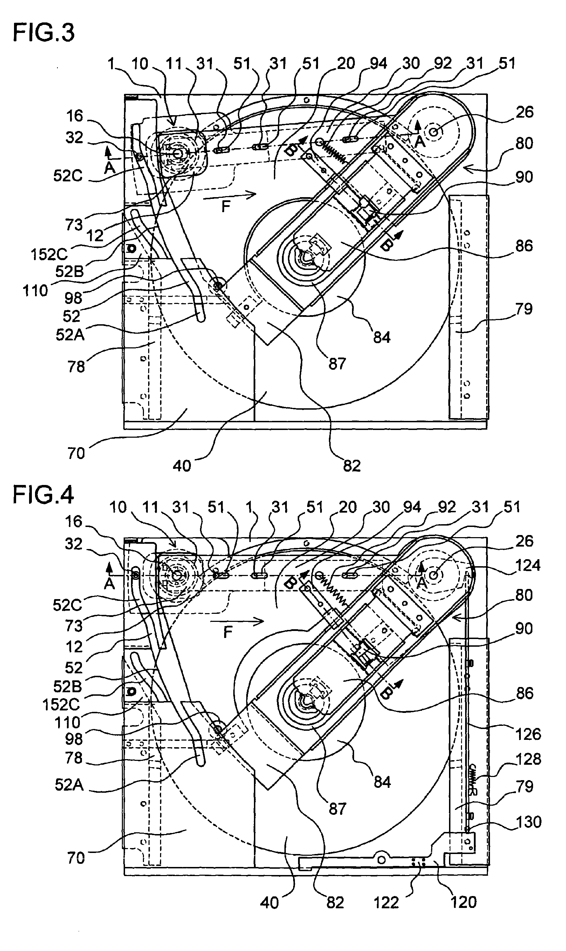

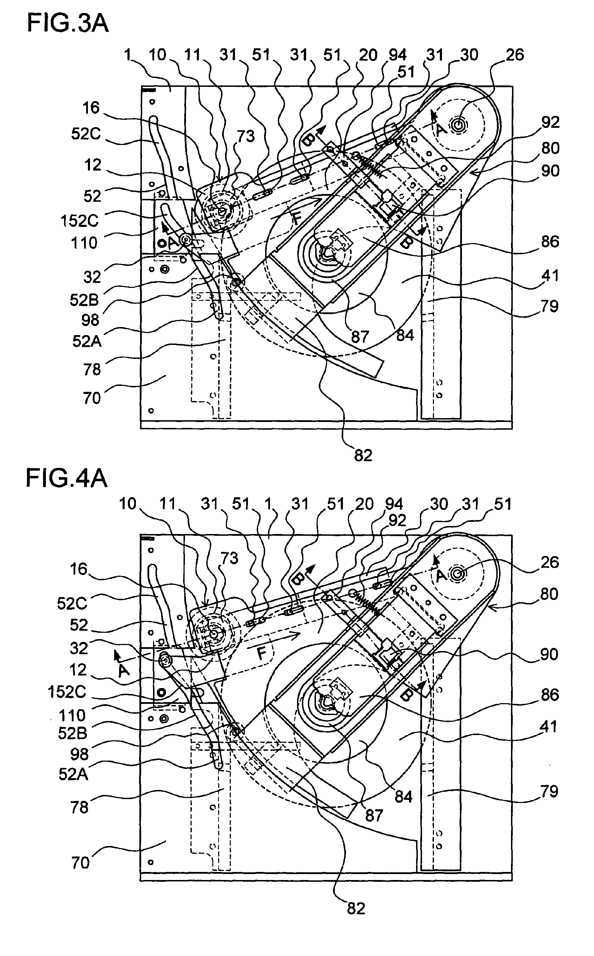

Lors du chargement d'un disque 40 de grand diamètre (figure 1), l'utilisateur l'introduit par la fente frontale de l'appareil, les éléments 11, 12 étant dans la position de la figure 5 et le pousse jusqu'aux moyens de détection 73 optique, électronique ou mécanique de la présence d'un disque. Dans un mode préféré, cette détection se fait optiquement à l'aide de moyens classiques incorporés à l'un des deux éléments 11, 12, par exemple l'élément 12. Suite à cette détection, le micro-moteur 71 est alimenté et la courroie 72, à laquelle est relié le bras 20, en se déplaçant assure une rotation du bras autour de l'axe 26 dans le sens horlogique. Lors de ce mouvement, l'axe 32 parcourt le profil de la gorge 52 et notamment sa section/arête 52A imposant à la coulisse 30 et donc à la languette 34 un mouvement relatif dans le sens de la flèche F ; ainsi les pattes 37, en se déplaçant, viennent appuyer sur la face supérieure de l'élément 11 (figure 6) qui se rapproche de l'élément 12 pour saisir le disque 40 entre les deux courroies 24 sur une surface excessivement réduite, située à sa périphérie et non porteuse d'informations. En poursuivant son déplacement, l'axe 32 suit l'arête 52B ce qui maintient la coulisse 30 immobile et donc le disque 40 emprisonné entre les éléments 11, 12 tandis que la rotation du bras 20 déplace ceux-ci et donc le disque 40, guidé par des moyens de guidage 78, 79 tels des rails latéraux vers l'intérieur de l'appareil, de la position représentée à la figure 2 à celle représentée à la figure 3. Lors de ce mouvement, les éléments 11, 12 et le support 40 d'informations peuvent, si nécessaire, tourner librement autour de l'axe 16 et donc permettre au disque 40 de suivre n'importe quel chemin de chargement, notamment celui requérant le moins d'espace ce qui est très avantageux pour des appareils compacts; ce chemin étant délimité ou imposé par la position des moyens de guidage 78, 79 pouvant même être constitués de simples axes ou butées mobiles, rotatives, pour ne causer aucune friction à la périphérie du disque. Lorsque le disque 40 arrive à proximité de la position d'enregistrement/de reproduction, l'axe 32 parcourt la section 52C de la gorge 52 (figure 3), ce qui déplace la coulisse 30 et la languette 34 dans le sens inverse de la flèche F. Ainsi, les pattes 37 quittent la surface supérieure de l'élément 11 qui est repoussé par le ressort 13 vers le haut, ce qui l'écarte de l'élément 12 et ainsi libère le disque 40 positionné au-dessus de ses moyens d'entraînement 100. La rotation du bras 20 se poursuit sur quelques degrés pour dégager entièrement les éléments 11, 12 du disque 40 qui est ainsi déposé sur ses moyens d'entraînement et donc peut être librement entraîné en rotation (figures 4, 5).

De préférence, des moyens sont prévus pour associer et/ou synchroniser le système de préhension 10 avec un moyen de maintien ou clamage 80 du disque 40 sur ses moyens d'entraînement 100 de façon à ne requérir aucun mécanisme additionnel.

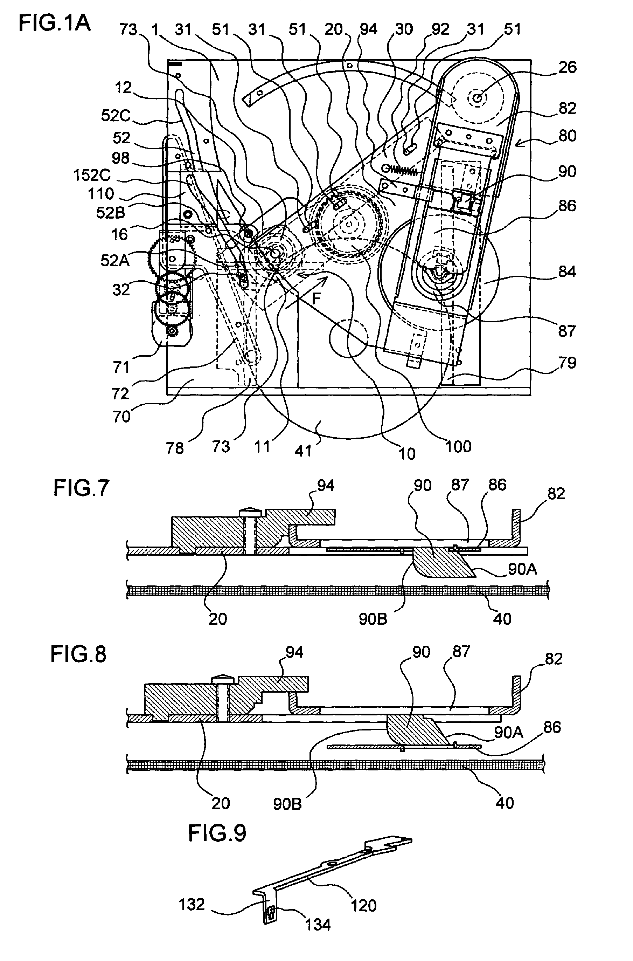

Dans l'exemple décrit, les moyens de clamage 80 sont constitués d'un bras 82, pivotant également autour de l'axe 26 et comprenant un plateau 84 porté par une languette 86 flexible (figures 1, 5 et 6) et passant au travers d'une ouverture 87 pratiquée dans le bras 82. Cette languette 86 subit l'action d'un moyen de commande 90, telle une butée (figures 7, 8) fixée sur le bras 20. Comme montré aux figures 1 à 4, le bras 82 est lié au bras 20 par un moyen de liaison tel un ressort 92 tandis qu'une butée 94, fixée sur le bras 20, limite le mouvement du bras 82 tant dans le plan horizontal que dans le plan vertical.

Lors de la rotation du bras 20, celui-ci, par l'intermédiaire du ressort 92, entraîne le bras 82 en rotation autour de l'axe 26 tandis que l'arête 90A du moyen de commande 90 maintient la languette 86 à un niveau haut (figure 7), donc le plateau de clamage 84 écarté du disque 40 (figure 6). Puis, le bras 82 voit sa rotation stoppée par une butée 98 positionnée sur l'élément fixe 70 à proximité de la gorge 52. Le mouvement de rotation du bras 20 se poursuivant, la butée 90 se déplace par rapport à la languette 86 ce qui la libère puisque l'arête 90A lui permet de descendre à son niveau bas puis l'arête 90B lui impose une pression vers le bas (figure 8), ce qui amène le plateau de clamage 84 à plaquer le disque 40 sur son moyen d'entraînement 100 (figure 5). Le disque est donc clamé et tant la lecture que l'enregistrement d'informations à sa surface peuvent être effectués.

Lors du déchargement d'un disque 40, les opérations décrites ci-dessus se déroulent de la même façon mais dans l'ordre inverse. En effet, le micro-moteur 71 est actionné et assure un déplacement de la courroie 72 dans le sens horlogique, donc une rotation du bras 20 dans le sens anti-horlogique. Ainsi, le profil 90A de la butée 90 agit sur la languette 86 pour la relever et donc écarter le plateau 84 du moyen de clamage du disque 40 pour libérer le disque de son moyen d'entraînement. Simultanément, les éléments 11, 12 et notamment leur profil 14 engagent le disque 40 pour le déplacer vers sa position d'éjection et l'axe 32, en parcourant la section 52C du profil de la gorge 52 (figure 3), impose à la coulisse 30 un mouvement relatif dans le sens de la flèche F ; ainsi les pattes 37, en coulissant, viennent appuyer sur la face supérieure de l'élément 11 qui se rapproche de l'élément 12. En se poursuivant, la rotation du bras 20 déplace le disque 40 vers la fente frontale de l'appareil ; ledit disque étant toujours guidé par les rails latéraux 78, 79. Arrivé à proximité de la position d'éjection (figure 2), l'axe 32 parcourt la section/arête 52A de la gorge 52, ce qui déplace la coulisse 30 dans le sens inverse de la flèche F. Ainsi, les pattes 37 quittent la surface supérieure de l'élément 11, alors repoussé vers le haut par le ressort 13 tandis que le disque 40, ainsi libéré, dépasse de la fente frontale de l'appareil (figure 1) pour être éventuellement saisi par l'utilisateur. On remarque que l'orifice central du disque est avantageusement positionné à l'extérieur de l'appareil permettant donc à l'utilisateur de saisir le disque par cet orifice et éviter tout contact avec sa ou ses surfaces porteuses d'informations.

Dans une seconde variante, telle que représentée aux figures 1A, 3A et 4A, le dispositif assure le chargement/déchargement de supports d'informations de tailles différentes, notamment de disques de grand diamètre, comme le dispositif décrit aux figures 1, 2, 3 et 4 et également de disques d'un plus petit diamètre. A cet effet, les moyens de guidage 78, 79 sont mobiles par rapport au châssis fixe 1 et l'arête 52B de la gorge 52 comprend un élément mobile 110 dont le déplacement est lié à celui des moyens de guidage 78, 79. Cet élément 110 comporte une section 152C semblable à la section 52C de la gorge 52 de la première variante tandis que son profil externe faisant face à l'axe 26 constitue l'arête 52B de la gorge 52 (figures 3, 4).

Lors de l'introduction d'un disque 41 de petit diamètre (figure 1A), le micro-moteur 71 assure la rotation horlogique du bras 20 suite à la détection de la présence du disque. De la même façon, l'axe 32 parcourt le profil de la gorge 52 dont l'arête 52A impose, comme décrit dans la première variante, à l'élément 11 de se rapprocher de l'élément 12 pour saisir le disque 41 (figure 6). En poursuivant son déplacement, l'axe 32 pénètre dans le profil de l'élément 110, le disque 41 restant maintenu par les éléments 11, 12 (figure 3A) et guidé par les moyens de guidage 78, 79 délimitant son chemin de chargement vers sa position opérative d'enregistrement/ de reproduction. L'axe 32 parcourt alors la section 152C de l'élément 110 (figure 4A) imposant aux éléments 11 et 12 de s'écarter pour libérer le disque 41 alors qu'il se trouve au-dessus de ses moyens d'entraînement et/ou de lecture. Les moyens de clamage 80 sont toujours maintenus écartés tandis que la rotation du bras 20 se poursuit pour dégager entièrement les éléments 11, 12 du disque 41. Le disque 41 étant positionné au-dessus de ses moyens d'entraînement 100, il est alors clamé sur ses moyens d'entraînement de la même façon que pour la première variante, puis entraîné en rotation (figures 4A, 5).

Lors du déchargement d'un disque 41 de petit diamètre, les opérations décrites ci-dessus se déroulent de la même façon mais dans l'ordre inverse. Le micro-moteur 71 est actionné, commandant ainsi une rotation anti-horlogique du bras 20 qui d'abord relève les moyens de clamage 80 du disque 41 pour le dégager de ses moyens d'entraînement 100 (figure 3A). L'axe 32, en parcourant la section 152C de l'élément 110 (figure 3A), assure le rapprochement des éléments 11 et 12 et donc l'éjection du disque 41 guidé par les rails 78, 79 jusqu'à ce que l'axe 32 atteigne la section 52A de la gorge 52 où les éléments 11, 12 sont à nouveau écartés par l'action des moyens élastiques 13, le disque 41 pouvant alors être saisi par l'utilisateur. L'appareil est donc prêt pour l'éventuelle insertion d'un disque 40, 41.

Si un disque 40 de grand diamètre est introduit dans la variante représentée aux figures 1A, 3A, 4A, les moyens de guidage 78, 79, mobiles, s'écartent sous l'action d'insertion du disque. Simultanément, l'élément mobile 110 dont le déplacement est lié à celui des rails 78, 79 s'écarte de la course de l'axe 32 de sorte que celui-ci coopère uniquement avec l'arête 52B et la section 52C de la gorge 52 comme dans la première variante (figures 3 et 4).

Lors du déchargement d'un disque 40 de grande taille, les opérations d'éjection se déroulent de la même façon que dans la première variante jusqu'à ce que l'utilisateur saisisse le disque 40. Alors les rails 78, 79 mobiles se rapprochent l'un de l'autre sous l'action de moyens élastiques non représentés et l'élément mobile 110 se replace dans la course de l'axe 32 au niveau de l'arête 52B de la gorge 52. L'appareil est donc prêt pour l'insertion éventuelle d'un disque 40, 41 quel qu'en soit le diamètre.

Le mouvement de rotation du bras 20 autour de son axe 26 n'est qu'un exemple de mode de déplacement ; il est en effet tout à fait possible que le bras 20 soit plus compact et effectue un déplacement sensiblement linéaire.

Un avantage découlant du principe même du dispositif objet de l'invention est que tous les éléments décrits ci-dessus et relatifs au chargement d'un support d'informations sont positionnés au-dessus dudit support laissant ainsi totalement libre l'espace situé en dessous de celui-ci, ce qui permet notamment d'utiliser tout moyen d'entraînement et de lecture disponible. Ainsi, il y a en dessous du niveau du support d'informations une totale liberté d'installation, de montage.

Le dispositif est en outre muni d'un mécanisme empêchant toute insertion d'un disque lorsqu'un autre est en position opérative.

Comme montré à la figure 4, ce mécanisme comprend un volet 120, pivotant autour d'un axe 122 situé à l'arrière de la face frontale de l'appareil et au-dessus de la fente d'insertion du disque, une commande 124 et une coulisse 126 placée latéralement.

A l'approche de la fin du mouvement de chargement d'un disque 40, 41, la commande 124, fixée au bras 20 et donc soumise à sa rotation, vient appuyer sur la coulisse 126 pour la translater à l'encontre de l'action des moyens élastiques 128. L'extrémité 130 de la coulisse 126, située à proximité du volet 120, possède un profil incliné pour agir sur ledit volet 120 en le pivotant autour de l'axe 122 de sorte que son extrémité opposée, constituée d'un pli 132 (figure 9), est positionnée au milieu de la fente d'insertion pour partiellement l'obturer et donc empêcher toute insertion d'un disque 40, 41. Pour la facilité et l'information de l'utilisateur, ce pli 132 incorpore une diode lumineuse 134 qui est alors mise sous tension par un circuit approprié.

Lors de l'éjection du disque 40, 41, la rotation du bras 20 et donc de la commande 124 laisse la coulisse 126 libre à l'action de ses moyens élastiques 128 qui la déplacent en arrière pour permettre au volet 120 de pivoter dans le sens horlogique et dégager de la fente d'insertion le pli 132 permettant l'éjection du disque 40, 41, puis éventuellement l'insertion d'un nouveau disque.

Dans un mode de réalisation alternatif, c'est l'élément 12 du système de préhension 10 qui est mobile et se déplace entre un niveau inopératif situé au-dessous du niveau de reproduction du support d'informations et un niveau opératif situé au-dessus du niveau des moyens d'entraînement du support d'informations pour éviter toute interférence avec le support d'informations lors de ses mouvements de chargement/déchargement. Dans un autre mode de réalisation alternatif, les deux éléments 11, 12 sont mobiles verticalement et leur déplacement assuré par une came ou un excentrique monté sur le bras 20.

### Légende des références dans les figures

- 1: châssis
- 10: système de préhension
- 11,: 12 éléments mobiles
- 13: moyen élastique, ressort
- 14: profil
- 16: axe
- 20: moyen de déplacement, bras
- 21: surface
- 22: gorge
- 24: courroie
- 26: axe
- 30: moyen de commande, coulisse
- 31: élément/téton
- 32: axe
- 34: languette
- 37: patte
- 40,: 41 support d'informations, disque
- 51: gorges
- 52: moyen de commande/arête/gorge
- 52A,: 52B, 52C arête/section de 52
- 70: élément fixe
- 71: micro-moteur
- 72: courroie
- 73: moyen de détection
- 78,: 79 moyens de guidage, rails
- 80: moyens de clamage
- 82: bras
- 84: plateau de clamage
- 86: languette
- 87: ouverture
- 90: moyen de commande, butée
- 90A,: 90B arêtes de 90
- 92: moyen de liaison
- 94: butée
- 98: butée
- 100: moyen d'entraînement
- 110: élément mobile
- 120: volet
- 122: axe
- 124: commande
- 126: coulisse
- 128: moyens élastiques
- 130: extrémité de 126
- 132: pli de 120
- 134: diode lumineuse
- 152C: section de l'élément mobile 110

## Revendications

1. Dispositif de chargement de support d'informations (40) comprenant un système de préhension (10) dudit support constitué de deux éléments (11, 12) mobiles l'un par rapport à l'autre et associés à un moyen de déplacement (20), **caractérisé en ce que** ces deux éléments (11, 12) sont montés librement sur le moyen de déplacement (20) et associés à un moyen de commande (30) leur assurant un mouvement relatif lors de l'actionnement du moyen de déplacement (20).

2. Dispositif selon la revendication principale, **caractérisé en ce que** le moyen de commande (30) effectue un mouvement relatif par rapport au moyen de déplacement (20).

3. Dispositif selon la revendication principale, **caractérisé en ce que** le moyen de commande (30) est composé d'éléments (37) qui, lors du mouvement relatif, coopèrent avec l'un des éléments mobiles (11, 12) pour le rapprocher respectivement l'éloigner de l'autre élément mobile (12, 11).

4. Dispositif selon l'une quelconque des revendications précédentes, **caractérisé en ce qu'**au moins l'un des éléments mobiles (11, 12) est soumis à l'action de moyens élastiques (13).

5. Dispositif selon l'une quelconque des revendications précédentes, **caractérisé en ce que** les éléments mobiles (11, 12) sont montés librement sur un axe (16).

6. Dispositif selon l'une quelconque des revendications précédentes, **caractérisé en ce que** les éléments mobiles (11, 12) possèdent un profil (14) périphérique sensiblement incliné et des surfaces (21) de préhension du support (40).

7. Dispositif selon l'une quelconque des revendications précédentes, **caractérisé en ce que** le système de préhension (10) emprisonne une surface limitée située à la périphérie du support d'informations (40).

8. Dispositif selon l'une quelconque des revendications précédentes, **caractérisé en ce que** le dispositif de chargement est associé à des moyens de clamage (80) du support (40) en position opérative par l'intermédiaire de moyens de liaison (92) les liant au moyen de déplacement (20).

9. Dispositif selon la revendication 8, **caractérisé en ce que** le moyen de déplacement (20) porte un moyen de commande (90) coopérant avec les moyens de clamage (80) pour le faire passer entre ses niveaux haut et bas.

10. Dispositif selon la revendication 9, **caractérisé en ce que** le mouvement relatif entre le moyen de déplacement (20) et les moyens de clamage (80) assure l'actionnement du moyen de commande (90) pour faire passer lesdits moyens de clamage de leur niveau haut à leur niveau bas et vice-versa.

11. Dispositif selon l'une quelconque des revendications précédentes, **caractérisé en ce que** le moyen de déplacement (20) et/ou les moyens de clamage (80) pivotent autour d'un axe (26) fixe.

12. Dispositif selon la revendication 2, **caractérisé en ce que** le moyen de commande (30) compte un élément (31) coopérant avec une commande (52) pour assurer le mouvement relatif du moyen de commande (30) sur le moyen de déplacement (20).

13. Dispositif selon la revendication 12, **caractérisé en ce que** la commande (52) comprend une arête/gorge 52B.

14. Dispositif selon la revendication 12, **caractérisé en ce que** la commande (52) comprend un élément mobile (110).

15. Dispositif selon la revendication 14, **caractérisé en ce que** l'élément mobile (110) comporte une section (152C) de la commande (52).

16. Dispositif selon l'une des revendications 14 ou 15, **caractérisé en ce que** le profil externe de l'élément mobile (110) constitue l'arête/section 52B de la commande (52).

17. Dispositif selon la revendication 1, **caractérisé en ce qu'**il est associé à des moyens de guidage (78, 79) délimitant le chemin de chargement du support (40) saisi par le dispositif.
